# EUROPÄISCHE PATENTSCHRIFT

(11) **EP 0 717 758 B1**
(45) Veröffentlichungstag und Bekanntmachung des Hinweises auf die Patenterteilung: **10.06.1998**
(21) Anmeldenummer: 94926900.5
(22) Anmeldetag: 27.08.1994
(51) Int. Cl.: C08J 3/05, C09D 123/02

(54) **STABILE WÄSSRIGE POLYOLEFINWACHSDISPERSIONEN**
STABLE AQUEOUS POLYOLEFIN-WAX DISPERSIONS
DISPERSIONS AQUEUSES STABLES DE CIRE POLYOLEFINIQUE

(30) Priorität: 08.09.1993 DE 4330342
(43) Veröffentlichungstag der Anmeldung: 26.06.1996
(73) Patentinhaber: BASF AKTIENGESELLSCHAFT, 67056 Ludwigshafen (DE)
(72) Erfinder: MÜLLER, Michael, Wolfgang, D-68647 Biblis (DE); KLINGELHÖFER, Paul, D-68161 Mannheim (DE); WEISS, Stefan, D-69151 Neckargemünd (DE)
(86) Internationale Anmeldenummer: EP9402846
(87) Internationale Veröffentlichungsnummer: WO9507313

(56) Entgegenhaltungen:
- US-A- 4 191 673
- DATABASE WPI Section Ch, Week 9102, Derwent Publications Ltd., London, GB; Class A35, AN 91-007783 & DD,A,281 310 (AKAD WISSENSCHAFT) 8. August 1990
- DATABASE WPI Section Ch, Week 8947, Derwent Publications Ltd., London, GB; Class A13, AN 89-345293 & JP,A,1 258 914 (MTP CHEMICAL) 16. Oktober 1989

## Beschreibung

Die vorliegende Erfindung betrifft neue wäßrige Polyolefinwachsdispersionen, die
A) 5 bis 65 Gew.-% Polyethylen- oder Polypropylenwachs mit einer mittleren Teilchengröße von 1 bis 50 µm und einer Säurezahl kleiner als 5 mg KOH/g Wachs und
B) 0,5 bis 20 Gew.-% mit 1 bis 50 mol eines 1,2-Alkylenoxids mit 2 bis 4 C-Atomen umgesetztes Glycerid von überwiegend ethylenisch ein- oder mehrfach ungesättigten C₁₆- bis C₂₂-Monocarbonsäuren, die zumindest teilweise zusätzlich Hydroxylgruppen enthalten, wenn das Glycerid als Triglycerid vorliegt, als Dispergiermittel

### enthalten.

Wäßrige Wachsdispersionen auf Basis Polyethylen oder Polypropylen lassen sich prinzipiell auf zwei Wegen herstellen: als Primärdispersionen durch Polymerisation von Ethylen bzw. Propylen in einer tensidhaltigen wäßrigen Phase unter Druck und in Gegenwart eines Initiatorsystems oder als Sekundärdispersionen durch Dispergieren von dispergierbaren pulverförmigen Polyethylen- bzw. Polypropylenwachsen mit Hilfe eines geeigneten Dispergatorsystems. Unter emulgierbaren Wachsen versteht man hier üblicherweise mit Carboxylat-, Keto- oder Hydroxylgruppen funktionalisierte niedermolekulare Polyolefinketten; diese lassen sich entweder durch Copolymerisation von Ethylen bzw. Propylen mit beispielsweise ungesättigten Carbonsäuren wie Acrylsäure oder durch Luftoxidation von Polyolefinwachsen herstellen.

Primärdispersionen haben in der Regel Teilchengrößen im Bereich von 0,01 bis 0,25 µm, stabile Sekundärdispersionen ließen sich bislang nur bis zu einer mittleren Teilchengröße von knapp 1 µm herstellen. Dispersionen mit größeren Teilchen neigen auf Grund der niedrigen Dichte und der Hydrophobie des Polyolefinwachses zur Phasentrennung.

Bei beiden Herstellmethoden sind üblicherweise nur Feststoffgehalte von bis zu ca. 35 Gew.-% erreichbar. Höhere Wachsgehalte sind nur unter Schwierigkeiten und durch Mitverwendung geeigneter Hilfsmittel in relativ hohen Mengen erzielbar.

Aus der US-A 4 371 658 sind Spinnhilfsmittel zur Herstellung von Polyamidgarnen bekannt, die ein Gemisch aus verschiedenen Emulgatoren, oxidiertem Polyethylen mit einer Säurezahl von ca. 14 bis 32 und Alkalimetallhydroxid in wäßriger Emulsion darstellen. Als eine Emulgatorkomponente wird mit 2 bis 16 mol Ethylenoxid umgesetztes Ricinusöl (Kastoröl) genannt. In der US-A 4 191 673 und der Literaturstelle WPI AN 89-345293 werden waßrige Dispersionen beschrieben, welche nicht funktionalisierte Wachse enthalten.

Aufgabe der vorliegenden Erfindung war es, stabile wäßrige Polyolefinwachsdispersionen bereitzustellen, die aufgrund der anwendungstechnischen Anforderungen eine mittlere Teilchengröße von deutlich mehr als 1 µm aufweisen und praktisch unbegrenzt lagerfähig sind. Außerdem sollten diesen Dispersionen möglichst einfach und mit möglichst wenig Hilfsmitteln herzustellen sein. Die Dispersionen sollten auf nicht funktionalisiertem Polyolefinwachs, d.h. ohne stabilisierende Carboxylatgruppen, basieren.

Demgemäß wurden die eingangs definierten wäßrigen Polyolefinwachsdispersionen gefunden. Durch die Wahl des Dispergatorsystems B ist es nun möglich, stabile Polyolefinwachsdispersionen mit den gewünschten Eigenschaften durch einfaches Einrühren des entsprechenden feinen (mikronisierten) Wachspulvers zusammen mit dem Dispergiermittel bei Raumtemperatur in Wasser zu erhalten. Dabei sind Feststoffgehalte bis zu 65 Gew.-% realisierbar.

Die mittlere Teilchengröße der Polyolefinwachse A in den erfindungsgemäßen Dispersionen liegt bei 1 bis 50 µm, insbesondere 3 bis 20 µm, vor allem 5 bis 15 µm. Die mittlere Teilchengröße kann am besten nach dem Coulter-Verfahren bestimmt werden.

Man setzt handelsübliche nicht funktionalisierte Polyethylenwachse mit gewichtsgemittelten Molekulargewichten im Bereich von 500 bis 10 000 g/mol, insbesondere von 1 000 bis 5 000 g/mol, oder Polypropylenwachse mit gewichtsgemittelten Molekulargewichten im Bereich von 5 000 bis 50 000 g/mol, insbesondere von 15 000 bis 30 000 g/mol, oder auch Mischungen hieraus ein. Der Gehalt an Polyethylen bzw. Polypropylen in diesen Wachsen beträgt mehr als 99 Gew.-%. Diese Wachse werden nach üblichen Methoden fein zerkleinert, so daß sie die notwendige Korngröße (Teilchengröße) aufweisen. Sie haben Säurezahlen von kleiner als 5, vorzugsweise kleiner als 3, insbesondere kleiner als 2, vor allem kleiner als 1 mg KOH/g Wachs, was auf im wesentlichen nur als Verunreinigungen anzusehende saure Bestandteile in den Wachsen hindeutet.

Die erfindungsgemäßen Dispersionen sind auch bei hohen Feststoffgehalten problemlos gieß- und rührfähig und weisen in der Regel Viskositäten nach Brookfield von 200 bis 5 000, insbesondere von 500 bis 1 600 mm²/s auf.

Die erfindungsgemäßen Dispersionen enthalten als Hauptkomponenten 5 bis 65, vorzugsweise 10 bis 60, insbesondere 20 bis 55, vor allem 40 bis 50 Gew.-% des Wachses A und 0,5 bis 20, vorzugsweise 1 bis 15, insbesondere 3 bis 12, vor allem 4 bis 10 Gew.-% des Dispergiermittels B. Gewünschtenfalls können noch zusätzlich übliche Hilfsstoffe wie Schaumdämpfer, z.B. Organophosphate, Lösungsvermittler, z.B. N-Methylpyrrolidon, Verflüssiger, insbesondere bei Feststoffgehalten über 50 Gew.-%, Biozide, Duftstoffe, Farbmittel, Korrosionsschutzmittel oder ähnliches zugegeben werden.

Die Fettsäuren im alkoxylierten Glycerid B sind überwiegend, d.h. zu mehr als 50 Gew.-%, vorzugsweise mehr als 70 Gew.-%, insbesondere mehr als 80 Gew.-%, ethylenisch ein- oder mehrfach, vorzugsweise ethylenisch ein- bis dreifach ungesättigte C₁₆-bis C₂₂-Monocarbonsäuren, vorzugsweise C₁₈-Monocarbonsäuren, die zusätzlich Hydroxylgruppen enthalten können. Beispiele solcher Fettsäuren sind Ölsäure, Elaidinsäure, Linolsäure, Linolensäure, Erucasäure und 12-Hydroxy-9-cis-octadecensäure (12-Hydroxyölsäure, Ricinolsäure). Zu untergeordneten Anteilen können in das alkoxylierte Glycerid B gesättigte Fettsäuren wie Myristinsäure, Palmitinsäure, Stearinsäure oder Cerotinsäure eingebaut sein. Das Glycerid liegt meist oder überwiegend als Triglycerid vor, Mono-und/oder Diglycerid-Strukturen mit nicht veresterten Hydroxylgruppen können aber auch auftreten und sind dann sogar erforderlich, wenn die Fettsäurereste keine Hydroxylgruppen zur Reaktion mit dem Alkylenoxid enthalten.

Als 1,2-Alkylenoxid kommt insbesondere Ethylenoxid, daneben aber auch Propylenoxid oder Butylenoxid in Betracht. Es können auch Gemische der genannten Alkylenoxid zur Umsetzung mit dem Glycerid eingesetzt werden. Der Alkoxylierungsgrad beträgt 1 bis 50, vorzugsweise 2 bis 30, insbesondere 3 bis 20, vor allem 5 bis 15 mol Alkylenoxid pro Mol Glycerid.

In einer bevorzugten Ausführungsform setzt man als Komponente B mit 3 bis 20 mol Ethylenoxid umgesetztes Glycerid von überwiegend ethylenisch ein- bis dreifach ungesättigten C₁₈-Monocarbonsäuren, die zumindest teilweise zusätzlich Hydroxylgruppen enthalten, ein. "Zumindest teilweise" meint, daß ein Teil oder die Gesamtmenge der Monocarbonsäuren, d.h. normalerweise 50 bis 100 Gew.-%, vorzugsweise 70 bis 100 Gew.-%, insbesondere 80 bis 100 Gew.-% der Monocarbonsäuren, eine oder mehrere Hydroxylgruppen enthält.

Insbesondere wird ethoxyliertes Glycerid B bevorzugt, das als C₁₈-Monocarbonsäure hauptsächlich, d.h. zu mehr als 50 Gew.-%, vorzugsweise mehr als 70 Gew.-%, insbesondere mehr als 80 Gew.-%, 12-Hydroxy-9-cis-octadecensäure (Ricinolsäure) enthält.

Ganz besonders hervorragende Ergebnisse erzielt man mit dem entsprechenden Ethoxylierungsprodukt von natürlich vorkommendem Ricinusöl (Kastoröl) als Komponente B. Ricinusöl enthält normalerweise 80 bis 85 Gew.-% Ricinolsäureglycerid, ca. 7 Gew.-% Ölsäureglycerid, ca. 3 Gew.-% Linolsaureglycerid, ca. 2 Gew.-% Palmitinsäureglycerid und ca. 1 Gew.-% Stearinsäureglycerid.

Mit 5 bis 15 mol Ethylenoxid umgesetztes Ricinusöl ist im Handel beispielsweise unter dem Namen Emulan® ELP (Produkt der BASF Aktiengesellschaft) erhältlich. Emulan ELP wird hauptsächlich als Emulgator für Pflanzenöle wie Erdnußöl, Kokosöl, Leinöl, Maiskeimöl, Olivenöl, Palmöl, Palmkernöl, Rapsöl, Ricinusöl, Sojaöl oder Sonnenblumenöl eingesetzt.

Gegenstand der vorliegenden Erfindung ist auch die Verwendung von mit 1 bis 50 mol eines 1,2-Alkylenoxids mit 2 bis 4 C-Atomen umgesetzten Glyceriden von überwiegend ethylenisch ein- oder mehrfach ungesättigten C₁₆- bis C₂₂-Monocarbonsäuren, die zumindest teilweise zusätzlich Hydroxylgruppen enthalten, wenn das Glycerid als Triglycerid vorliegt, als Dispergiermittel für wäßrige Polyolefinwachsdispersionen, welche Polyethylen- oder Polypropylenwachs mit einer mittleren Teilchengröße von 1 bis 50 µm und einer Säurezahl kleiner als 5 mg KOH/g Wachs enthalten.

Die erfindungsgemäßen stabilen wäßrigen Polyolefinwachsdispersionen werden vor allem für die Herstellung von Fußboden- und Steinpflegemitteln, Schuhpflegemitteln, Autopflegemitteln, Druckfarben, Druckpasten, Lacken, insbesondere wäßrigen Lacken, Verpackungen, beispielsweise für Lebensmittel, Schmierfetten, Vaseline, Ziehmitteln, Verguß- und Isoliermassen für elektrische 0 Teile, wäßrigen Holzlasuren, Heißschmelzbeschichtungen, kosmetischen Zubereitungen und Zahnpasten, in der Kunststoffverarbeitung, in der Papierherstellung und im Korrosionsschutz, zur Ausrüstung von Geweben und Garnen und zur Lederbehandlung sowie als Trennmittel im Kokillen-, Druck- und Schleuderguß von Buntmetallen verwendet.

Die erfindungsgemäßen Wachsdispersionen werden hierbei meist zur Verbesserung der Gleiteigenschaften oder der Scheuerfestigkeit eingesetzt, wodurch sie durch ihre spezielle Teilchengröße ausgezeichnet geeignet sind.

Die erfindungsgemäßen Dispersionen sind toxikologisch vollkommen unbedenklich und können daher für Anwendungen im Lebensmittelbereich und in der Kosmetik problemlos eingesetzt werden. Sie sind ebenfalls aus ökologischer Sicht vollkommen unbedenklich, da es sich hierbei um einen Emulgator auf Basis von Naturstoffen oder naturstoffverwandten Substanzen handelt.

Die erfindungsgemäßen Wachsdispersionen sind praktisch unbegrenzt stabil, d.h. zeigen selbst nach mehrmonatiger oder mehrjähriger Lagerung keine Absetzung oder keine Ablagerungen an Gefäßwänden und -böden. Durch die hohe mittlere Teilchengröße resultieren die gewünschten Anwendungseigenschaften. Die erfindungsgemäßen Dispersionen sind einfach und problemlos herstellbar und durch die hohe Feststoffkonzentration sind nicht zuletzt Lagerung und Transport des fertigen Produktes sehr wirtschaftlich.

### Beispiel

6,5 g mit 5 bis 15 mol Ethylenoxid umgesetztes Ricinusöl (Emulan ELP der BASF Aktiengesellschaft) wurden in 43,5 g vollentsalztem Wasser vorgelegt und unter intensivem Rühren wurden 50 g mikronisiertes Polyethylenwachs mit einem gewichtsgemittelten Molekulargewicht von 3 000 und einer Säurezahl (gemäß DIN 53 402) von < 0,1 mg KOH/g (Luwax® AF 30 der BASF Aktiengesellschaft) bei 20°C eingerührt. Das eingesetzte Wachs hatte eine Teilchengröße von ca. 8 µm (bestimmt durch Coulter Counter).

Die erhaltene Wachsdispersion wies eine Viskosität nach Brookfield von 600 mm²/s auf und war unbegrenzte Zeit stabil (keine Phasentrennung).

## Patentansprüche

1. Stabile wäßrige Polyolefinwachsdispersionen, enthaltend
A) 5 bis 65 Gew.-% Polyethylen- oder Polypropylenwachs mit einer mittleren Teilchengröße von 1 bis 50 µm und einer Säurezahl kleiner als 5 mg KOH/g Wachs und
B) 0,5 bis 20 Gew.-% mit 1 bis 50 mol eines 1,2-Alkylenoxids mit 2 bis 4 C-Atomen umgesetztes Glycerid von überwiegend ethylenisch ein- oder mehrfach ungesättigten C₁₆- bis C₂₂-Monocarbonsäuren, die zumindest teilweise zusätzlich Hydroxylgruppen enthalten, wenn das Glycerid als Triglycerid vorliegt, als Dispergiermittel.

2. Stabile wäßrige Polyolefinwachsdispersionen nach Anspruch 1, enthaltend als Komponente A Polyethylen- oder Polypropylenwachs mit einer mittleren Teilchengröße von 3 bis 20 µm und einer Säurezahl kleiner als 2 mg KOH/g Wachs.

3. Stabile wäßrige Polyolefinwachsdispersionen nach Anspruch 1 oder 2, enthaltend
A) 20 bis 55 Gew.-% der Komponente A und
B) 3 bis 12 Gew.-% der Komponente B.

4. Stabile wäßrige Polyolefinwachsdispersionen nach den Ansprüchen 1 bis 3, enthaltend als Komponente B mit 3 bis 20 mol Ethylenoxid umgesetztes Glycerid von überwiegend ethylenisch ein- bis dreifach ungesättigten C₁₈-Monocarbonsäuren, die zumindest teilweise zusätzlich Hydroxylgruppen enthalten.

5. Stabile wäßrige Polyolefinwachsdispersionen nach Anspruch 4, wobei das ethoxylierte Glycerid B als C₁₈-Monocarbonsäure hauptsächlich 12-Hydroxy-9-cis-octadecensäure (Ricinolsäure) enthält.

6. Stabile wäßrige Polyolefinwachsdispersionen nach Anspruch 5, wobei als Komponente B das Ethoxylierungsprodukt von natürlich vorkommendem Ricinusöl eingesetzt wird.

7. Verwendung von mit 1 bis 50 mol eines 1,2-Alkylenoxids mit 2 bis 4 C-Atomen umgesetzten Glyceriden von überwiegend ethylenisch ein- oder mehrfach ungesättigten C₁₆- bis C₂₂-Monocarbonsäuren, die zumindest teilweise zusätzlich Hydroxylgruppen enthalten, wenn das Glycerid als Triglycerid vorliegt, als Emulgatoren für wäßrige Polyolefinwachsdispersionen, welche Polyethylen- oder Polypropylenwachs mit einer mittleren Teilchengröße von 1 bis 25 µm und einer Säurezahl kleiner als 5 mg KOH/g Wachs enthalten.

8. Verwendung von stabilen wäßrigen Polyolefinwachsdispersionen gemäß den Ansprüchen 1 bis 6 für die Herstellung von Fußboden- und Steinpflegemitteln, Schuhpflegemitteln, Autopflegemitteln, Druckfarben, Druckpasten, Lacken, Verpackungen, Schmierfetten, Vaseline, Ziehmitteln, Verguß- und Isoliermassen für elektrische Teile, wäßrigen Holzlasuren, Heißschmelzbeschichtungen, kosmetischen Zubereitungen und Zahnpasten, in der Kunststoffverarbeitung, in der Papierherstellung und im Korrosionsschutz, zur Ausrüstung von Geweben und Garnen und zur Lederbehandlung sowie als Trennmittel im Kokillen-, Druck- und Schleuderguß von Buntmetallen.

## Claims

1. A stable aqueous polyolefin wax dispersion containing
A) from 5 to 65% by weight of polyethylene wax or polypropylene wax having a mean particle size of from 1 to 50 µm and an acid number of less than 5 mg of KOH/g of wax and
B) from 0.5 to 20% by weight of a glyceride of predominantly ethylenically monounsaturated or polyunsaturated C₁₆-C₂₂-monocarboxylic acids, at least some of which additionally contain hydroxyl groups if the glyceride is present as a triglyceride, which glyceride has been reacted with from 1 to 50 mol of a 1,2-alkylene oxide of 2 to 4 carbon atoms, as a dispersant.

2. A stable aqueous polyolefin wax dispersion as claimed in claim 1, containing, as component A, polyethylene wax or polypropylene wax having a mean particle size of from 3 to 20 µm and an acid number of less than 2 mg of KOH/g of wax.

3. A stable aqueous polyolefin wax dispersion as claimed in claim 1 or 2, containing
A) from 20 to 55% by weight of component A and
B) from 3 to 12% by weight of component B.

4. A stable aqueous polyolefin wax dispersion as claimed in any of claims 1 to 3, containing, as component B, a glyceride of predominantly ethylenically mono- to triunsaturated C₁₈-monocarboxylic acids, at least some of which additionally contain hydroxyl groups, said glyceride having been reacted with from 3 to 20 mol of ethylene oxide.

5. A stable aqueous polyolefin wax dispersion as claimed in claim 4, wherein the ethoxylated glyceride B contains mainly 12-hydroxy-9-cis-octadecenoic acid (ricinoleic acid) as C₁₈-monocarboxylic acid.

6. A stable aqueous polyolefin wax dispersion as claimed in claim 5, wherein the ethoxylation product of naturally occurring castor oil is used as component B.

7. Use of glycerides of predominantly ethylenically mono- or polyunsaturated C₁₆-C₂₂-monocarboxylic acids, at least some of which additionally contain hydroxyl groups if the glyceride is present as a triglyceride, which glycerides have been reacted with from 1 to 50 mol of a 1,2-alkylene oxide of 2 to 4 carbon atoms, as emulsifiers for aqueous polyolefin wax dispersions which contain polyethylene wax or polypropylene wax having a mean particle size of from 1 to 25 µm and an acid number of less than 5 mg of KOH/g of wax.

8. Use of stable aqueous polyolefin wax dispersions as claimed in any of claims 1 to 6 for the production of floor and stone polishes, shoe polishes, car polishes, printing inks, print pastes, finishes, packaging, lubricating greases, vaseline, drawing compounds, sealing and insulating materials for electrical parts, aqueous wood glazes, hot-melt coatings, cosmetic formulations and toothpastes, in plastics processing, in papermaking and in corrosion protection, for the treatment of fabrics and yarns and for leather treatment and as parting compounds in gravity die casting, pressure die casting and centrifugal casting of nonferrous metals.

## Revendications

1. Dispersions de cires de polyoléfines aqueuses et stables, qui contiennent
A) 5 à 65% en poids d'une cire de polyéthylène ou de polypropylène d'un calibre moyen des particules de 1 à 50 µm et d'un indice d'acidité inférieur à 5 mg de KOH/g de cire et
B) 0,5 à 20% en poids d'un glycéride ayant réagi avec 1 à 50 moles d'un oxyde de 1,2-alkyléne comportant de 2 à 4 atomes de carbone d'acides monocarboxyliques en C₁₆ à C₂₂ principalement éthyléniquement mono- ou polyinsaturés, qui contiennent au moins partiellement complémentairement des radicaux hydroxyle, lorsque le glycéride se présente sous forme de triglycéride, à titre d'agents dispersifs.

2. Dispersions de cires de polyoléfines aqueuses, stables, suivant la revendication 1, contenant, à titre de composant A, une cire de polyéthylène ou de polypropylène, d'un calibre moyen des particules de 3 à 20 pm et d'un indice d'acidité inférieur à 2 mg de KOH/g de cire.

3. Dispersions de cires de polyoléfines aqueuses, stables, suivant la revendication 1 ou 2, contenant
A) 20 à 55% en poids du composant A et
B) 3 à 12% en poids du composant B.

4. Dispersions de cires de polyoléfines aqueuses, stables, suivant les revendications 1 à 3, contenant, à titre de composant B, d'un glycéride ayant réagi avec 3 à 20 moles d'oxyde d'éthylène d'acides monocarboxyliques en C₁₈ principalement éthyléniquement mono- à triinsaturés, qui contiennent partiellement complémentairement des radicaux hydroxyle.

5. Dispersions de cires de polyoléfines aqueuses, stables, suivant la revendication 4, où le glycéride éthoxylé B contient, à titre d'acide monocarboxylique en C₁₈, principalement de l'acide 12-hydroxy-9-cis-octa-décénoïque (acide ricinoléique).

6. Dispersions de cires de polyoléfines aqueuses, stables, suivant la revendication 5, où on utilise, à titre de composant B, le produit de l'éthoxylation d'huile de ricin naturelle.

7. Utilisation de glycérides ayant réagi avec 1 à 50 moles d'un oxyde de 1,2-alkylène comportant de 2 à 4 atomes de carbone d'acides monocarboxyliques en C₁₆ à C₂₂ principalement éthyléniquement mono-ou polyinsaturés, qui contiennent au moins partiellement complémentairement des radicaux hydroxyle, lorsque le glycéride se présente sous forme de triglycéride, à titre d'émulsifs pour des dispersions de cires de polyoléfines aqueuses, qui contiennent une cire de polyéthylène ou de polypropylène d'un calibre moyen des particules de 1 à 25 µm et d'un indice d'acidité inférieur à 5 mg de KOH/g de cire.

8. Utilisation de dispersions de cires de polyoléfines aqueuses, stables, suivant les revendications 1 à 6, pour la fabrication d'agents d'entretien des planchers et des carrelages, d'agents d'entretien des chaussures, d'agents d'entretien des voitures, d'encres d'impression, de pâtes d'impression, de laques ou peintures, d'emballages, de graisses lubrifiantes, de vaselines, d'agents d'étirage, de masses de remplissage ou de compoundage et de masses d'isolement pour des articles ou pièces électriques, d'agents de vemissage ou de glaçage du bois aqueux, de revêtements thermofusibles, de préparations cosmétiques et de pâtes dentifrices, dans le traitement de matières plastiques, dans la fabrication du papier et dans la protection contre la corrosion, pour l'équipement de tissus et de fils et pour le traitement du cuir, comme aussi à titre d'agents séparateurs ou de démoulage dans la coulée en coquille, sous pression et centrifuge de métaux lourds non ferreux.
